# FASCICULE DE BREVET EUROPEEN

(11) **EP 0 773 705 B1**
(45) Date de publication et mention de la délivrance du brevet: **05.04.2000**
(21) Numéro de dépôt: 96402372.5
(22) Date de dépôt: 07.11.1996
(51) Int. Cl.: H05B 3/86, H05B 3/84

(54) **Procédé et dispositif pour le dépôt et la fixation d'un fil métallique mince sur une pellicule thermoplastique d'un vitrage en verre feuilleté**
Verfahren und Vorrichtung zum Aufbringen und Befestigen eines dünnen Metaldrahtes auf der thermoplastischen Film einer Verbundglasscheibe
Method and apparatus for the application and fixation of a thin metallic wire on the thermoplastic film of a laminated window pane

(30) Priorité: 07.11.1995 DE 19541427
(43) Date de publication de la demande: 14.05.1997
(73) Titulaire: SAINT-GOBAIN VITRAGE, 92400 Courbevoie (FR)
(72) Inventeur: Gillner, Manfred, 52078 Aachen (DE); Pikhard, Siegfried, 52159 Roetgen (DE); Vanaschen, Luc, 4700 Eupen (BE); Eckstein, Hans-Jurgen, 41516 Grevenbroich (DE)
(74) Mandataire: Muller, René

(56) Documents cités:
- EP-A- 0 032 139
- CH-A- 434 005
- DE-A- 2 329 030
- US-A- 4 284 452
- US-A- 5 071 692

## Description

La présente invention concerne un procédé pour le dépôt et la fixation d'un fil métallique mince sur la surface d'une pellicule thermoplastique pour un vitrage feuilleté, dans lequel la pellicule thermoplastique est maintenue par dépression sur la surface d'un tambour cylindrique, le tambour est mis en rotation, et le fil métallique, à l'aide d'un dispositif de dépôt de fil comportant un outil sertisseur chauffé, une bobine d'alimentation de fil et des moyens pour acheminer le fil depuis la bobine d'alimentation de fil en dessous de l'outil sertisseur chauffé est déposé en continu sur la pellicule, par le fait qu'un mouvement d'avancement linéaire est communiqué au dispositif de dépôt de fil sur un guide disposé parallèlement à l'axe du tambour. Elle a trait en outre à un dispositif destiné à exécuter le procédé et à une pellicule thermoplastique telle que obtenue à partir du procédé.

Un procédé de ce type est connu par le document DE 4 201 620 A1. Dans ce procédé connu, le dispositif de dépôt de fil est déplacé parallèlement à l'axe du tambour au moyen d'un entraînement par vis, tandis que le tambour tourne. Par un avancement régulier du dispositif de dépôt de fil à l'aide de l'entraînement à vis, le fil est déposé en hélice sur la surface du tambour et forme sur la feuille des segments de fil s'étendant de façon rectiligne selon une disposition parallèle. L'outil sertisseur est constitué dans ce cas d'un galet presseur chauffé. Un frein électromagnétique est couplé à la bobine d'alimentation, pour maintenir le fil sous une tension déterminée.

Le procédé cité au début du présent mémoire est également connu par le document EP 0 443 691 A1. Dans ce cas, le fil est déformé, avant le dépôt hélicoïdal, par deux roues dentées en prise, de telle sorte qu'il soit déposé sur la pellicule thermoplastique sous forme ondulée.

Le procédé connu est utilisé à grande échelle pour la production de vitrages de sécurité feuilletés pouvant être chauffés électriquement. Dans ce cas, des conducteurs collecteurs ayant la forme de bandes de clinquant de cuivre étamées sont fixés sur la pellicule thermoplastique tout d'abord le long de deux bords opposés de la pellicule thermoplastique. Après le dépôt hélicoïdal du fil métallique, le fil est connecté aux conducteurs collecteurs, par le fait qu'une autre bande de clinquant de cuivre étamée est déposée sur la bande de clinquant de cuivre inférieure, et les deux bandes de clinquant de cuivre sont brasées l'une à l'autre, avec inclusion des fils. Les fils sont alors sectionnés à l'extérieur des conducteurs collecteurs. La pellicule garnie des segments de fil est alors enlevée du tambour et est façonnée en vue de son incorporation au vitrage feuilleté.

Les vitrages de sécurité feuilletés pouvant être chauffés sont utilisés tant dans le bâtiment que dans les véhicules. Dans la plupart des cas, particulièrement lorsqu'il s'agit de vitrages rectangulaires, la disposition des fils chauffants selon une orientation rectiligne, telle qu'elle est obtenue à l'aide du procédé du type spécifié, est souhaitée. Dans le cas également de formes de vitrages s'écartant de la forme rectangulaire, en particulier dans le cas de lunettes arrière d'automobiles pouvant être chauffées, les fils chauffants étaient déposés jusqu'à présent selon une orientation rectiligne.

L'invention a pour but de développer le procédé cité au début du présent mémoire, de telle sorte qu'il permette le dépôt du fil métallique sur la pellicule thermoplastique selon une forme courbe quelconque.

Le développement du procédé conforme à l'invention réside dans le fait que l'entraînement pour l'avancement linéaire du dispositif de dépôt de fil est commandé selon un programme temps-course établi en fonction de la forme courbe souhaitée des fils.

L'invention prévoit donc, au lieu d'un avancement régulier du dispositif de dépôt de fil dans une seule direction, de commander le déplacement du dispositif de dépôt de fil, de telle sorte que l'avancement du dispositif de dépôt de fil ait lieu dans les deux directions selon un programme temps-course déterminé, qui est établi sur la base des données géométriques pour l'allure courbe souhaitée des fils. Ainsi, la vitesse d'avancement du dispositif de dépôt de fil est bien entendu dépendante de la vitesse de rotation du tambour. Dans le cas de courbures faibles des tracés de fils, la vitesse de rotation du tambour peut rester constante, si la direction des fils est sensiblement transversale à l'axe longitudinal du tambour.

A l'aide de ce procédé, il est par exemple possible, dans le cas de pare-brise pour automobiles, dont le bord inférieur s'étend suivant une courbe plus ou moins prononcée, de déposer les fils chauffants sur la pellicule selon une disposition parallèle à ce bord de forme courbe quelle que soit la forme de ce bord courbe.

Dans un développement avantageux de l'invention, le procédé peut être exécuté de telle sorte que l'entraînement pour le mouvement de rotation du tambour soit en outre également commandé selon le programme temps-course établi conformément à la forme courbe souhaitée des fils. Tandis que, dans le cas d'un sens de rotation identique du tambour, on peut élaborer des conducteurs chauffants, pour lesquels les fils sont connectés en parallèle via des conducteurs collecteurs, on peut réaliser sur la pellicule des tracés sinueux du fil par une rotation pas à pas du tambour et un mouvement linéaire en va-et-vient du dispositif de dépôt de fil, et des tracés circulaires concentriques ou d'autres tracés parallèles les uns aux autres du fil par un renversement du sens de rotation répétitif du tambour et le cas échéant un mouvement linéaire en va-et-vient simultané du dispositif de dépôt de fil. De cette manière, le fil peut être disposé à l'intérieur du vitrage de sécurité feuilleté pratiquement selon toute forme souhaitée.

Selon un aspect avantageux supplémentaire du procédé conforme à l'invention, il est prévu en outre, de commander la position angulaire du dispositif de dépôt de fil autour d'un axe de rotation perpendiculaire ou plus ou moins perpendiculaire à l'axe du tambour conformément au programme de course prédéfini. Il est ainsi acquis qu'aucune force dirigée transversalement à la direction du fil respective ne soit exercée sur le fil au niveau du point de dépôt, ce qui peut mener à des difficultés lors du dépôt de fil.

Selon un aspect particulièrement avantageux, le procédé conforme à l'invention est exécuté à l'aide d'un dispositif de dépôt de fil pour lequel l'outil sertisseur est constitué d'un galet presseur roulant sur la pellicule. On peut ainsi utiliser en principe tant des têtes de dépôt de fil, au moyen desquelles un fil droit est déposé sous forme courbe, telles qu'elles sont décrites dans le document EP 0 553 025 A1, que les têtes de dépôt de fil décrites dans le document EP 0 496 669 B1, qui conviennent pour le dépôt d'un fil ondulé.

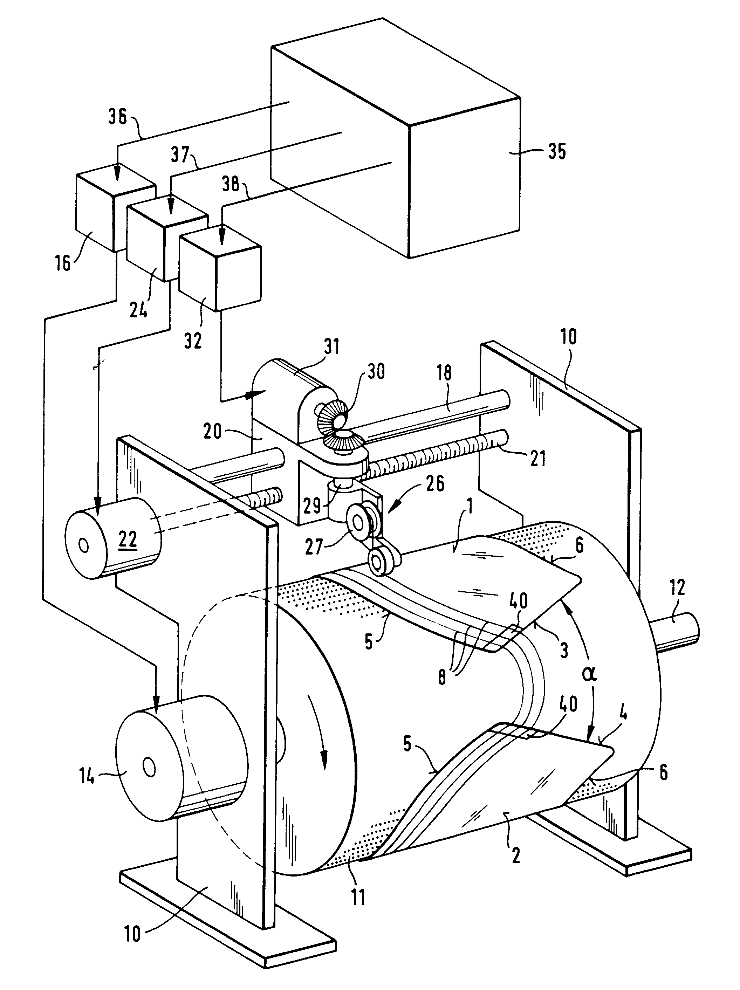

Un dispositif approprié pour l'exécution du procédé sera décrit plus loin, plus en détail, sur la base de l'unique dessin.

L'invention propose également une pellicule plastique, notamment destinée à être associée à au moins une plaque rigide, par exemple en verre, et notamment bombée, pour constituer un vitrage et comportant des fils métalliques déposés sur sa surface, les fils métalliques étant conformes à la forme courbe souhaitée.

Selon une variante de l'invention, la pellicule plastique est incorporée dans un vitrage.

Selon une variante avantageuse de l'invention, le vitrage présente au moins un bord courbe et les fils métalliques sont déposés selon un trajet également courbe, notamment parallèle au bord courbe du vitrage.

De façon préférée, les fils sont disposés dans la zone basse du vitrage.

Selon une variante de l'invention, le vitrage comporte une couche opaque déposée sur le verre en regard d'une partie au moins des fils métalliques.

Les vitrages selon l'invention peuvent notamment servir de vitrages chauffants grâce à une alimentation électrique des fils.

De façon préférée, le vitrage sert de vitrage chauffant en zone basse, ainsi un collage des balais d'essuie-glace par temps froid est évité.

A l'aide du dispositif représenté, des pellicules thermoplastiques 1, 2, par exemple en polyvinylbutyral, doivent être garnies dans une zone choisie de fils chauffants minces disposés suivant des courbes.

Les pellicules 1, 2 sont destinées à la fabrication de pare-brise qui présentent une forme plus ou moins trapézoïdale comportant les bords latéraux 3, 4, le bord inférieur 5 en arc de cercle et le bord supérieur 6 également en arc de cercle. La pellicule même peut être un peu plus grande que ce qui correspond à la forme finale du pare-brise. Le bord dépassant des feuilles de verre après l'assemblage de la pellicule avec les feuilles de verre peut être coupé après l'assemblage. Le bord inférieur 5 présente une courbure convexe en arc de cercle. Le champ inférieur du pare-brise s'étend, lorsqu'il est monté, jusque sous le capot du moteur. Ce champ inférieur doit pouvoir être chauffé électriquement, ce qui fait que les fils chauffants 8 doivent s'étendre parallèlement au bord inférieur courbe 5.

Le dispositif comprend un support 10, dans lequel un tambour cylindrique 11 présentant un diamètre relativement grand est monté à rotation sur un axe horizontal. Le tambour 11 est creux, et la paroi cylindrique du tambour est perforée. Une pompe à vide non représentée est raccordée au tambour 11 via une conduite 12. Les pellicules 1, 2 sont maintenues sur la surface cylindrique du tambour par la succion ainsi provoquée.

Le diamètre du tambour 11 peut être par exemple choisi de telle sorte que deux pellicules 1, 2 puissent être déposées sur la circonférence du tambour. Les deux pellicules 1, 2 occupent alors plus ou moins la position représentée dans le dessin, dans laquelle les bords latéraux 3, 4 adjacents l'un à l'autre ne s'étendent pas parallèlement l'un à l'autre, mais forment l'un avec l'autre un angle α relativement grand. Tandis que les fils chauffants 8 décrivent sur les pellicules 1, 2 à chaque fois un arc de cercle correspondant à la configuration du bord inférieur 5, l'arc de cercle que décrivent les fils chauffants dans la zone de l'angle α entre les bords latéraux 3, 4, présente une courbure opposée à la courbure sur les pellicules 1, 2, de sorte que les fils chauffants présentent sur la surface du tambour vue dans son ensemble une allure ondulée.

Le moteur à couple constant 14, qui est piloté par un amplificateur de régulation 16, sert à l'entraînement en rotation du tambour 11. Au-dessus du tambour 11 est disposé, sur le support 10, un guide 18 s'étendant parallèlement à l'axe de rotation du tambour 11, sur lequel est monté un chariot 20 déplaçable. L'entraînement du chariot 20 a lieu via une vis motrice 21, qui est mise en rotation par un moteur à couple constant 22. Le moteur à couple constant 22 est piloté par un amplificateur de régulation 24.

Le dispositif de dépôt de fil 26 est monté sur le chariot 20. Le dispositif de dépôt de fil comprend une bobine d'alimentation de fil 27 montée sur un support correspondant, un galet presseur 28 chauffé électriquement, qui enfonce dans la pellicule le fil provenant de la bobine d'alimentation 27, de même que des moyens de guidage appropriés, non représentés en détail, pour le fil entre la bobine d'alimentation et le galet presseur. Une description détaillée d'un tel dispositif de dépôt de fil pour le dépôt d'un fil droit apparaît dans le document EP 0 553 025 A1, auquel il est fait référence sur ce point.

Le dispositif de dépôt de fil 26 proprement dit est monté sur un arbre vertical 29, qui est monté à rotation sur le chariot 20. La position angulaire du dispositif de dépôt de fil 29 est commandée à l'aide du moteur à couple constant 31 via un engrenage à roues coniques 30. Le moteur à couple constant 31 est piloté par un amplificateur de régulation 32.

Une composante essentielle du dispositif est le processeur 35 équipé pour la commande par programme du dispositif. Ce processeur 35 est pourvu d'une mémoire de données appropriée, dans laquelle sont introduites les données pour le programme temps-course sur la base duquel le fil 8 doit être déposé sur les pellicules 1, 2 et sur la surface cylindrique du tambour entre les deux pellicules 1, 2. Conformément à ce programme, le processeur 35 commande l'amplificateur de régulation 16 pour l'entraînement en rotation du tambour 11, via la ligne de commande 36, l'amplificateur de régulation 24 pour l'entraînement en rotation de la vis motrice 21 via la ligne de commande 37, et l'amplificateur de régulation 32 pour l'ajustage angulaire du dispositif de dépôt de fil 26 via la ligne de commande 38.

Plusieurs chariots 20 pourvus chacun d'un dispositif de dépôt de fil peuvent aussi être disposés sur le guide 18, de telle sorte que, dans le cas d'une longueur suffisante du tambour 11, vu dans le sens axial du tambour 11, plusieurs pellicules puissent être fixées sur le tambour et être garnies simultanément d'un fil.

Lorsque le fil 8 est fixé de la manière décrite sur les pellicules 1, 2 sur la zone de surface souhaitée, le processeur 35 coupe l'entraînement en rotation du tambour 1. Sur chacune des bandes de clinquant de cuivre 40, qui ont été fixées préalablement sur les pellicules au niveau de leurs bords latéraux et qui sont étamées superficiellement sur le côté garni du fil 8, est déposée une deuxième bande de clinquant de cuivre présentant une surface étamée. A l'aide d'un fer à souder, les bandes de clinquant de cuivre appliquées l'une sur l'autre sont alors brasées l'une à l'autre, le fil 8 étant inclus. Les fils sont ensuite sectionnés à l'extérieur des pellicules 1, 2 à côté des bandes de clinquant de cuivre servant de conducteurs d'alimentation de courant. Les pellicules 1, 2 sont alors retirées du tambour 11 après la suppression de la dépression régnant dans le tambour 11 et sont ensuite façonnées en vue de leur incorporation dans des vitrages feuilletés.

## Revendications

1. Procédé pour le dépôt et la fixation d'un fil métallique (8) mince sur la surface d'une pellicule (1,2) thermoplastique pour un vitrage feuilleté, dans lequel la pellicule thermoplastique (1,2) est maintenue par dépression sur la surface d'un tambour cylindrique (11), le tambour (11) est mis en rotation, et le fil métallique (8), à l'aide d'un dispositif de dépôt de fil (26) comportant un outil sertisseur chauffé (28), une bobine d'alimentation de fil (27) et des moyens pour acheminer le fil depuis la bobine d'alimentation de fil (27) en dessous de l'outil sertisseur chauffé (28), est déposé en continu sur la pellicule (1,2) par le fait qu'un mouvement d'avancement linéaire est communiqué au dispositif de dépôt de fil sur un guide disposé parallèlement à l'axe du tambour (11), **caractérisé en ce que** l'entraînement pour l'avancement linéaire du dispositif de dépôt de fil (26) est commandé selon un programme temps-course établi conformément à la forme courbe souhaitée des fils (8).

2. Procédé suivant la revendication 1, **caractérisé en ce que** le dépôt et la fixation du fil ont lieu au cours d'un mouvement de rotation constant du tambour (11).

3. Procédé suivant la revendication 1, **caractérisé en ce que** l'entraînement pour le mouvement de rotation du tambour (11) est commandé selon un programme temps-course établi conformément à la forme souhaitée des fils (8).

4. Procédé suivant l'une quelconque des revendications 1 à 3, **caractérisé en ce que** la position angulaire du dispositif de dépôt de fil (26) est modifiée conformément au mouvement linéaire du dispositif de dépôt de fil (26).

5. Dispositif pour l'exécution du procédé suivant la revendication 1, comportant le tambour (11) cylindrique qui peut être mis en rotation par un moteur d'entraînement (14) et dont l'espace creux peut être mis sous dépression via une conduite (12) et la paroi cylindrique est perforée pour la fixation par succion des pellicules (1,2), un guide (18) disposé au-dessus du tambour (11) parallèlement à l'axe du tambour, un chariot (20) pouvant se déplacer le long du guide (18) et entraîné par l'intermédiaire d'un moteur (22), et le dispositif de dépôt de fil (26) monté sur le chariot (20) comportant un galet presseur (28) chauffé roulant sur la surface du tambour ou sur les pellicules (1, 2) et enfonçant le fil (8) dans les pellicules, la bobine d'alimentation de fil (27) et des moyens destinés à guider le fil (8) entre la bobine d'alimentation de fil (27) et le galet presseur (28), **caractérisé en ce qu'**un amplificateur de régulation (24), qui est commandé par un processeur (35) selon un programme temps-course correspondant à une allure courbe souhaitée du fil (8) sur la pellicule (1, 2), est disposé en amont du moteur d'entraînement (22) pour le déplacement linéaire du chariot (20) portant le dispositif de dépôt de fil (26).

6. Dispositif suivant la revendication 5, **caractérisé en ce qu'**un amplificateur de régulation (16) piloté par le processeur (35) est également placé en amount du moteur d'entraînement (14) pour le mouvement de rotation du tambour (11).

7. Procédé suivant la revendication 5 ou 6, **caractérisé en ce que** le dispositif de dépôt de fil (26) est monté sur un arbre (29) monté à rotation perpendiculairement à l'axe du tambour (11).

8. Dispositif suivant la revendication 7, **caractérisé en ce que** la position angulaire du dispositif de dépôt de fil (26) peut être commandée par l'intermédiaire d'un moteur à couple constant (31), qui est également piloté par le processeur (35) conformément au programme temps-course.

9. Pellicule plastique (1,2) obtenue à partir du procédé selon la revendication 1, notamment destinée à être associée à au moins une plaque rigide, par exemple en verre, et notamment bombée, pour constituer un vitrage et comportant des fils métalliques (8) déposés sur sa surface, **caractérisée en ce que** lesdits fils (8) sont conformes à la forme courbe souhaitée.

10. Vitrage incorporant la pellicule plastique (1,2) selon la revendication 9.

11. Vitrage selon la revendication 10, **caractérisé en ce qu'**il présente au moins un bord courbe **et en ce que** les fils (8) sont déposés selon un trajet également courbe, notamment parallèle au bord courbe du vitrage.

12. Vitrage selon la revendication 10 ou 11, **caractérisé en ce que** les fils (8) sont disposés dans la zone basse du vitrage.

13. Vitrage selon la revendication 12, **caractérisé en ce qu'**une couche opaque est déposée sur le verre en regard d'une partie au moins des fils (8).

14. Application du vitrage selon l'une des revendications 10 à 13, en tant que vitrage chauffant, les fils (8) étant alimentés électriquement.

15. Application du vitrage selon l'une des revendications 12 ou 13 en tant que vitrage chauffant en zone basse destiné à éviter le collage des balais d'essuie-glace par temps froid.

## Patentansprüche

1. Verfahren zum Ablegen und Fixieren eines dünnen Metalldrahtes (8) auf der Oberfläche einer thermoplastischen Folie (1, 2) für eine Verbundglasscheibe, bei dem die thermoplastische Folie (1, 2) auf der Oberfläche einer zylindrischen Trommel (11) durch Unterdruck festgehalten, die Trommel (11) in Drehung versetzt, und der Metalldraht (8) mit Hilfe einer ein beheiztes Einlegewerkzeug (28), eine Drahtvorratsspule (27) und Mittel zur Führung des Drahtes von der Drahtvorratsspule (27) unter das beheizte Einlegewerkzeug (28) aufweisenden Drahtablegevorrichtung (26) auf der Folie (1, 2) fortlaufend abgelegt wird, indem der Drahtablegevorrichtung auf einer parallel zur Trommelachse angeordneten Führungsbahn eine lineare Vorschubbewegung erteilt wird, **dadurch gekennzeichnet**, daß der Antrieb für die lineare Vorschubbewegung der Drahtablegevorrichtung (26) nach einem entsprechend der gewünschten Kurvenform der Drähte (8) erstellten Zeit-Weg-Programm gesteuert wird.

2. Verfahren nach Anspruch 1, **dadurch gekennzeichnet**, daß das Ablegen und Fixieren des Drahtes bei gleichbleibender Drehbewegung der Trommel (11) erfolgt.

3. Verfahren nach Anspruch 1, **dadurch gekennzeichnet**, daß der Antrieb für die Drehbewegung der Trommel (11) nach einem entsprechend der gewünschten Kurvenform der Drähte (8) erstellten Zeit-Weg-Programm gesteuert wird.

4. Verfahren nach einem der Ansprüche 1 bis 3, **dadurch gekennzeichnet**, daß die Winkelstellung der Drahtablegevorrichtung (26) entsprechend der jeweiligen Linearbewegung der Drahtablegevorrichtung verändert wird.

5. Vorrichtung zur Durchführung des Verfahrens nach Anspruch 1, mit der zylindrischen, von einem Antriebsmotor (14) in Drehung versetzbaren Trommel (11), deren Hohlraum über einen Leitung (12) unter Unterdruck setzbar und deren Zylinderwand zur Saugbefestigung der Folien (1,2) perforiert ist, einer oberhalb der Trommel (11) parallel zur Trommelachse angeordneten Führungsschiene (18), einem entlang der Führungsschiene (18) verfahrbaren und über einen Motor (22) angetriebenen Schlitten (20), und der an dem Schlitten (20) angeordneten Drahtablegevorrichtung (26) mit einer auf der Trommeloberfläche bzw. auf den Folien (1,2) abrollenden und den Draht in die Folie eindrückenden beheizten Druckrolle (28), einer Drahtvorratsspule (27) und Mitteln zur Führung des Drahtes (8) zwischen der Drahtvorratsspule (27) und der Druckrolle (28), **dadurch gekennzeichnet**, daß dem Antriebsmotor (22) für die Linearbewegung des die Drahtablegevorrichtung (26) tragenden Schlittens (20) ein Regelverstärker (24) vorgeschaltet ist, der von einem Prozessor (35) nach einem einem gewünschten Kurvenverlauf des Drahtes (8) auf der Folie (1,2) entsprechenden Zeit-Weg-Programm angesteuert wird.

6. Vorrichtung nach Anspruch 5, **dadurch gekennzeichnet**, daß auch dem Antriebsmotor (14) für die Drehbewegung der Trommel (11) ein von dem Prozessor (35) angesteuerter Regelverstärker (16) vorgeschaltet ist.

7. Vorrichtung nach Anspruch 5 oder 6, **dadurch gekennzeichnet**, daß die Drahtablegevorrichtung (26) an einer senkrecht zur Trommelachse drehbar gelagerten Welle (29) angeordnet ist.

8. Vorrichtung nach Anspruch 7, **dadurch gekennzeichnet**, daß die Winkellage der Drahtablegevorrichtung (26) durch einen Getriebemotor (31) steuerbar ist, der ebenfalls von dem Prozessor entsprechend dem Zeit-Weg-Programm angesteuert wird.

9. Mit dem Verfahren nach Anspruch 1 hergestellte plastische Folie (1, 2), die insbesondere zum Zusammenbau mit einer starren und insbesondere gebogenen Scheibe, z. B. aus Glas, bestimmt ist, um eine Glasscheibe zu bilden, und die auf ihrer Oberfläche verlegte metallische Drähte (8) umfaßt, **dadurch gekennzeichnet**, daß die besagten Drähte (8) der gewünschten Kurvenform entsprechen.

10. Glasscheibe mit der plastischen Folie (1, 2) gemäß Anspruch 9.

11. Glasscheibe nach Anspruch 10, **dadurch gekennzeichnet**, daß sie mindestens einen gekrümmten Rand aufweist und daß die Drähte (8) entlang einer ebenfalls gekrümmten Bahn, insbesondere parallel zum gekrümmten Rand der Glasscheibe, verlegt sind.

12. Glasscheibe nach Anspruch 10 oder 11, **dadurch gekennzeichnet**, daß die Drähte im unteren Bereich der Glasscheibe angeordnet sind.

13. Glasscheibe nach Anspruch 12, **dadurch gekennzeichnet**, daß eine opake Schicht auf dem Glas über wenigstens einem Teil der Drähte aufgetragen ist.

14. Verwendung der Glasscheibe nach einem der Ansprüche 10 bis 13 als Heizscheibe mit elektrisch gespeisten Drähten (8).

15. Verwendung der Glasscheibe nach einem der Ansprüche 12 oder 13 als im unteren Bereich beheizte Scheibe mit der Bestimmung, das Anhaften von Scheibenwischergummis bei Frostwetter zu verhindern.

## Claims

1. Process for the deposition and fixing of a thin metal wire (8) to the surface of a thermoplastic film (1, 2) for a laminated glazing, in which the thermoplastic film (1, 2) is maintained by vacuum on the surface of a cylindrical drum (11), which is rotated and the metal wire (8), with the aid of the wire deposition device (26) incorporating a heated crimping tool (28), a wire supply reel (27) and means for passing the wire from the wire supply reel (27) below the heated crimping tool (28), is continuously deposited on the film (1, 2) as a result of a linear advance movement being imparted to the wire deposition device on a guide arranged parallel to the axis of the drum (11), characterized in that the drive for the linear advance of the wire deposition device (26) is controlled in accordance with a time-travel program established in accordance with the desired curved shape of the wires (8).

2. Process according to claim 1, characterized in that the deposition and fixing of the wire take place during a constant rotary movement of the drum (11).

3. Process according to claim 1, characterized in that the drive for the rotary movement of the drum (11) is controlled in accordance with a time-travel program established in accordance with the desired shape of the wires (8).

4. Process according to any one of the claims 1 to 3, characterized in that the angular position of the wire deposition device (26) is modified in accordance with the linear movement of the wire deposition device (26).

5. Apparatus for performing the process according to claim 1, comprising the cylindrical drum (11), which can be rotated by a drive motor (14) and whose hollow space can be placed under a vacuum via a duct (12) and the cylindrical wall is perforated for fixing by suction films (1, 2), a guide (18) is placed above the drum (11) parallel to the drum axis, a carriage (20) can move along the guide (18) and is driven by means of a motor (22) and the wire deposition device (26) installed on the carriage (20) and having a heated pressure roller (28) rolling on the surface of the drum or on the films (1, 2) and embedding the wire (8) in the films, the wire supply reel (27) and means for guiding the wire (8) between the wire supply reel (27) and the pressure roller (28), characterized in that a regulating amplifier (24), which is controlled by a processor (35) in accordance with a time-travel program corresponding to a desired curved configuration of the wire (8) on the film (1, 2) is positioned upstream of the drive motor (22) for the linear displacement of the carriage (20) carrying the wire deposition device (26).

6. Apparatus according to claim 5, characterized in that a regulating amplifier (16) controlled by the processor (35) is also positioned upstream of the drive motor (14) for the rotary movement of the drum (11).

7. Apparatus according to claim 5 or 6, characterized in that the wire deposition device (26) is installed on a shaft (29) rotating perpendicular to the axis of the drum (11).

8. Apparatus according to claim 7, characterized in that the angular position of the wire deposition device (26) can be controlled by means of a constant torque motor (31), which is also controlled by the processor (35) in accordance with the time-travel program.

9. Plastic film (1, 2) obtained on the basis of the process according to claim 1 and in particular intended to be combined with at least one rigid plate, e.g. of glass and which is in particular bent, so as to form a glazing and having metal wires (8) deposited on its surface, characterized in that said wires (8) are given the desired curved shape.

10. Glazing incorporating the plastic film (1, 2) according to claim 9.

11. Glazing according to claim 10, characterized in that it has at least one curved edge and in that the wires (8) are deposited in accordance with a curved path, which is in particular parallel to the curved edge of the glazing.

12. Glazing according to claim 10 or 11, characterized in that the wires (8) are placed in the lower area of the glazing.

13. Glazing according to claim 12, characterized in that an opaque coating is deposited on the glass facing at least part of the wires (8).

14. Application of the glazing according to one of the claims 10 to 13 to a heated glazing, the wires (8) being supplied electrically.

15. Application of the glazing according to claims 12 or 13 as a heated glazing in the lower area intended to prevent the sticking of windscreen wiper blades in cold weather.
